# EUROPÄISCHE PATENTSCHRIFT

(11) **EP 3 393 913 B1**
(45) Veröffentlichungstag und Bekanntmachung des Hinweises auf die Patenterteilung: **01.07.2020**
(21) Anmeldenummer: 16816697.3
(22) Anmeldetag: 21.12.2016
(51) Int. Cl.: B65B 11/50, B65B 9/02, B65B 9/13

(54) **VERFAHREN ZUR MANIPULATIONSSICHEREN VERSIEGLUNG VON PACKGUT**
METHOD FOR TAMPER-PROOF SEALING OF PACKAGED GOODS
PROCÉDÉ DE SCELLAGE INVIOLABLE DE MARCHANDISE EMBALLÉE

(30) Priorität: 22.12.2015 DE 102015122597
(43) Veröffentlichungstag der Anmeldung: 31.10.2018
(60) Teilanmeldung: 20175272.2
(73) Patentinhaber: Gebr. Heinemann SE & Co. KG, 20457 Hamburg (DE)
(72) Erfinder: KOCH, Thomas André, 22941 Bargteheide (DE)
(74) Vertreter: Patentanwälte Olbricht Buchhold Keulertz
(86) Internationale Anmeldenummer: PCT/EP2016/082201
(87) Internationale Veröffentlichungsnummer: WO 2017/108965

(56) Entgegenhaltungen:
- EP-A1- 0 249 534
- EP-A1- 1 445 197
- DE-A1- 1 922 180
- DE-A1- 3 521 416
- GB-A- 1 025 034
- US-A- 5 720 153
- US-A1- 2011 268 371

## Beschreibung

Gegenstand der Erfindung ist ein Verfahren zur manipulationssicheren Versiegelung von Packgut auf einer Palette, bei dem eine Folienhaube über das Packgut gezogen wird und mit einer Bodenfolie verschweißt wird. Gegenstand der Erfindung ist weiterhin eine Vorrichtung zur manipulationssicheren Versieglung von Packgut auf einer Palette.

Beim Transport von Waren, welche für sicherheitssensible Bereiche bestimmt sind, muss sichergestellt werden, dass diese den Empfänger erreichen, ohne dass sie manipuliert worden sind. Hierfür kommen eine Reihe von Sicherheitsmaßnahmen zum Einsatz. Neben Maßnahmen, welche Diebstahl und Manipulationen vermeiden sollen, ist die Versiegelung der Fracht eine Kernmaßnahme, sodass Manipulationen und Manipulationsversuche durch den Warenempfänger erkannt werden können.

Logistikprozesse, welche die Luftsicherheit beeinflussen können (u.a. Lagerung, Verpackung, Transport, Umschlag, Anlieferung und Übergabe insbesondere von Luftfracht, Flughafenlieferungen und Bordvorräten), können, zur Vermeidung von Röntgen- oder alternativen Frachtkontrollen vor Verbringung der Fracht in Sicherheitsbereiche (z.B. Flughafensicherheitsbereiche), nach Maßgabe des Konzeptes der Sicheren Lieferkette gestaltet werden. Voraussetzung für eine behördliche Genehmigung des Verfahrens auf Basis der einschlägigen nationalen und internationalen Bestimmungen ist die betriebliche Implementierung und regelmäßige Validierung von Sicherheitsmechanismen, welche ein ausreichend hohes Sicherheitsniveau über die gesamte Lieferkette - beginnend beim Versender, über eingesetzte Spediteure und Sub-Unternehmer bis hin zum Warenempfänger- gewährleisten. Diese Maßnahmen erstrecken sich über die Anlagen-, Fracht- und Personalsicherheit.

Die US 2010/0037563 A1 beschreibt eine Verpackung für Transportgüter auf Paletten, die temperaturempfindlich sind. Die thermoisolierende Verpackung besteht aus einem Oberteil und einem Unterteil, die die Palette einschließlich der darauf gestapelten Transportgüter umschließen. Der obere Teil und der untere Teil werden durch verkleben, heften oder die Verwendung von Klebeband miteinander verbunden. Die Verpackung wird insbesondere für die Verladung von Gütern auf Flughäfen verwendet, damit die verpackten Waren im Transit gekühlt oder gegen Temperaturveränderungen geschützt sind. Die Transportgüter sind bei dieser Verpackung jedoch Manipulationen zugänglich, da einfach beispielsweise das Klebeband gelöst und anschließend erneut verwendet werden kann, ohne dass dieses von außen erkennbar ist.

DE 1 922 180 A beschreibt das Verpacken von Stückgut auf einer Palette. Es erfolgt ein Verschweißen der Folien, um eine wasserdichte Verbindung zu erreichen und das Packgut vor Wasser zu schützen. Die Verbindung zwischen Bodenabdeckung und Stapelabdeckung kann durch Kleben oder Siegeln erfolgen. Das Versiegeln erfolgt bevorzugt mit einer Heißluftbeaufschlagung.

US 2011/0268371 A1 offenbart manipulationssichere Umschläge und Versandbeutel für den Post- oder Kurierversand, besonders den sicheren Postversand von Dokumenten, Geldscheinen oder kleineren vertraulichen Gegenständen. Hierzu wird eine Zange aus einem Heiz- und Schmelzelement und einem Presselement zum Erstellen der konturierten Naht eingesetzt. Die Folien werden zwischen die Zangenhälften gelegt, wobei die eine Zangenfläche Erhebung, z.B. in Form von Prismen 54 oder Fingern 72 (Fig. 7) und die andere Zangenhälfte kongruente Öffnungen 60 aufweist, die zur Aufnahme der Erhebungen dienen. Durch Zusammendrücken der Zange werden die Folien von den Erhebungen in die Öffnungen gedrückt und die Folien des Umschlags verschweißt.

Aufgabe der Erfindung ist es daher ein Verfahren bereitzustellen, mit dem Packgut für sicherheitssensible Bereiche manipulationssicher verpackt werden kann, so dass der Empfänger Manipulationen und Manipulationsversuche erkennen kann und in die Lage versetzt wird, ggf. geeignete Kontrollmaßnahmen einleiten zu können. Insbesondere für den Transport von Luftfracht, Bordvorräten und Flughafenlieferungen im Rahmen von sicheren Lieferketten soll dieses Verfahren geeignet sein. Das Verfahren soll außerdem die Automatisierung des Verpackungs- und Versiegelungsprozesses ermöglichen. Weiterhin ist es Aufgabe der Erfindung eine Vorrichtung bereitzustellen, mit der Packgut auf einer Palette manipulationssicher verpackt werden kann.

Die Aufgabe wird erfindungsgemäß gelöst durch ein Verfahren zur manipulationssicheren Versieglung von Packgut auf einer Palette, gemäß Patentanspruch 1.

Gegenstand der Erfindung ist weiterhin eine Vorrichtung zur Durchführung des erfindungsgemäßen Verfahrens zur manipulationssicheren Versieglung von Packgut auf einer Palette, umfassend
- einen Drehteller, zur Aufnahme einer Palette mit Packgut,
- mindestens eine Schweißstation mit mindestens einem Heizstempel, der eine kontierte Stempelfläche hat, wobei in der Schweißstation die Packfolie mit der Bodenfolie verschweißt und so das Packgut versiegelt wird, und
- ggf. eine Hubvorrichtung für die Schweißbalken.

Weitere Ausführungsformen sind Gegenstand der Unteransprüche oder nachfolgend beschrieben.

Die Palette ist erfindungsgemäß bevorzugt eine Europoolpalette. Eine Europoolpalette ist eine Palette nach EN 13698-1 und EPAL (European Pallet Association e.V.) und verfügt über eine längere Längsseite mit 1200 mm Länge und eine kürzere Breitseite mit 800 mm Länge. Die Europoolpaletten weisen in Richtung der Breitseite kurze Bretter auf, auf denen in Richtung der Längsseite längere Bretter in der Höhe versetzt aufliegen. Der Versatz entspricht dabei der Dicke der Bretter. Anstelle einer Palette können auch andere Unterlagen wie z.B. Transportplatten oder Transportkisten verwendet werden, die hier aber als Palette bezeichnet werden. Optional können die Ecken der Palette mit einem Kantenschutz versehen werden, um bei der Stauung auf der Ladefläche einen Abstand z.B. von 5-25 mm zwischen den Paletten zu schaffen und so Schäden an der Folie bzw. der Schweißnaht durch Reibung zu vermeiden. Die Palette ist optional eine EUR-2/3-Industriepalette. Die Palette besteht beispielsweise aus Holz oder Kunststoff. Erfindungsgemäß werden sowohl Einwegpaletten als auch Mehrwegpaletten eingesetzt.

Neben dem bevorzugten Schweißen mit Heizelementen, können die Kunststofffolien auch z.B. mit Ultraschall oder Laserstrahlen erhitzen und dann mit einem konturierten Stempel verpresst werden.

Bei dem erfindungsgemäßen Verfahren erfolgen in einer Ausführungsform die Schweißvorgänge jeweils paarweise, wobei immer die einander gegenüberliegenden Seiten gleichzeitig verschweißt werden. Die einander gegenüberliegenden Ecken werden entweder auch gleichzeitig verschweißt oder die Verschweißung der Ecken erfolgt einzeln oder seitenweise.

Erfindungsgemäß wird die Palette, die mit dem auf der Bodenfolie platzierten Packgut beladen ist, im Schritt d. auf einem Drehteller platziert, bevorzugt manuell oder per Förderstreckenanbindung. Das Verschweißen der Folien in Schritt f. erfolgt bei Verwendung eines Drehtellers in mehreren Schritten. Bevorzugt sind die Schritte zum Verschweißen gemäß Schritt f. die folgenden:
- f1.: Drehen der Palette auf dem Drehteller um 90°,
- f2.: Verschweißen der Folien auf beiden Breitseiten der Palette, wobei ein oder mehrere gerade Heizstempel auf der gesamten Breite der Palette gegen die überlappenden Folien gedrückt werden,
- f3.: Drehen der Palette auf dem Drehteller um 90° zurück in die Ausgangsposition,
- f4.: Verschweißen der Folien auf beiden Längsseiten der Palette, wobei auf beiden Längsseiten der Palette ein oder mehrere gerade Heizstempel auf der gesamten Länge der Palette gegen die überlappenden Folien gedrückt werden, wobei bevorzugt die Schweißbalken um den Versatz der Palettenbretter angehoben bzw. gesenkt werden,
- f5.: Verschweißen der Folien an den 4 Ecken der Palette, wobei ein oder mehrere runde Heizstempel an den Ecken der Palette gegen die Folien gedrückt werden.

Alternativ können auch die Schritte f2. und f4. miteinander vertauscht werden, so dass jeweils zuerst die Längsseiten und dann die Breitseiten miteinander verschweißt werden. Wenn zuerst die Längsseiten miteinander verschweißt werden, erfolgt Schritt f1. nach Schritt f4. Alternativ kann die Verschweißung der Ecken gemäß Schritt f5 auch parallel zur Verschweißung von Längs- und Breitseiten gem. Schritt f2 und f4 erfolgen.

In einer alternativen Ausführungsform werden die einzelnen Seiten jeweils einzeln verschweißt. Bei dieser Alternative umfasst das Verschweißen gemäß Schritt f. bevorzugt die Schritte:
- f1.: Verschweißen der Folien auf einer Längsseiten der Palette, wobei ein oder mehrere Heizstempel auf der gesamten Länge einer Längsseite der Palette gegen die überlappenden Folien gedrückt werden, wobei bevorzugt die Schweißbalken um den Versatz der Palettenbretter angehoben bzw. gesenkt werden,
- f2.: Drehen der Palette auf dem Drehteller um 90°,
- f3.: Verschweißen der Folien auf einer Breitseite der Palette, wobei ein oder mehrere Heizstempel auf der gesamten Breite der Breitseite der Palette gegen die überlappenden Folien gedrückt werden,
- f4.: Drehung der Palette auf dem Drehteller um weitere 90°,
- f5.: Verschweißen der Folien auf der zweiten Längsseiten der Palette, wobei ein oder mehrere Heizstempel auf der gesamten Länge der Längsseite der Palette gegen die überlappenden Folien gedrückt werden, wobei bevorzugt die Schweißbalken um den Versatz der Palettenbretter angehoben bzw. gesenkt werden,
- f6.: Drehen der Palette auf dem Drehteller um weitere 90°,
- f7.: Verschweißen der Folien auf der zweiten Breitseite der Palette, wobei ein oder mehrere Heizstempel auf der gesamten Breite der Breitseite der Palette gegen die überlappenden Folien gedrückt werden,
- f8.: Drehung der Palette auf dem Drehteller um weitere 90° zurück in die Ausgangsposition und
- f5.: Verschweißen der Folien an den 4 Ecken der Palette, wobei ein oder mehrere runde Heizstempel an den Ecken der Palette gegen die Folien gedrückt werden.

Alternativ können auch jeweils zuerst die Breitseiten und dann die Längsseiten miteinander verschweißt werden. Wenn zuerst die Breitseiten miteinander verschweißt werden, muss als erster Schritt eine zusätzliche Drehung der Palette auf dem Drehteller um 90° erfolgen. Alternativ kann die Verschweißung der Ecken gemäß Schritt f5. jeweils auch zeitgleich mit oder im Anschluss an eine Verschweißung einer Breit- oder Längsseite erfolgen.

Das Verschweißen der Bodenfolie mit der Folienhaube im Bereich der Überlappungsfläche der Folien umfasst in einer Ausführungsform die Schritte:
- Ausfahren des Heizstempels aus einer Ausgangsposition,
- Aufheizen des Heizstempels,
- Andrücken des Heizstempels an die Folien im Bereich der Überlappungsfläche, und
- Zurückfahren des Heizstempels in die Ausgangsposition,
wobei der Heizstempel bevorzugt pneumatisch, z.B. mit einem Pneumatikzylinder betrieben wird. Alternativ erfolgt zunächst das Andrücken des Heizstempels an die Folien im Bereich der Überlappungsfläche und dann erst das Aufheizen des Heizstempels. Die Endlagenerkennung der Anpresszylinder der Heizstempel erfolgt bevorzugt über Drückschalter, Reed-Kontakte oder Initiatoren. Die Anpresskraft der Heizstempel ist bevorzugt elektronisch einstellbar.

Im erfindungsgemäßen Verfahren wird ein Heizstempel verwendet, der eine konturierte Stempelfläche hat. Die Stempelfläche weist bevorzugt eine Kontur in Form eines Logos, eines Symbols, eines oder mehrerer Buchstaben oder eines Schriftzugs oder eines beliebigen Musters auf. Durch die Konturierung der Stempelfläche entsteht eine Schweißnaht mit einer eindeutigen und wieder erkennbaren Kontur. Die Schweißnaht weist dabei die gleiche Kontur wie die konturierte Stempelfläche auf, d.h. die konturierte Schweißnaht hat bevorzugt die Kontur in Form eines Logos, eines Symbols, eines oder mehrerer Buchstaben, eines Musters oder eines Schriftzugs. Bei einer Variante werden hierfür die Fräsungen auf der Stempelfläche (Schweißfläche) in z.B. Logo-, Symbol-, Muster-, Buchstaben- oder Schriftzugform nicht beheizt, sodass sich aus der umliegenden beheizten Fläche die Schweißverbindung ergibt. Bei einer weiteren Variante wird die gesamte Stempelfläche beheizt, sodass sich eine durchgängige Schweißverbindung ergibt. Bei einer weiteren Variante werden nur die Fräsungen auf der Stempelfläche (Schweißfläche) in z.B. Logo-, Symbol-, Muster-, Buchstaben- oder Schriftzugform beheizt, sodass sich eine Schweißverbindung in Form der Kontur ergibt. Unter einem geraden Heizstempel wird erfindungsgemäß ein Heizstempel mit einer geraden Stempelfläche, d.h. einer Stempelfläche, deren Grundfläche sich in einer Ebene erstreckt, in Form einer Platte verstanden. Die Kontur erstreckt sich als Erhebung/Fräsung über die Grundfläche hinaus. Ein runder Heizstempel weist eine gebogene Stempelfläche zum Beispiel in Form eines Kreisabschnitts auf. Die Heizstempel sind bevorzugt mit einer Beschichtung überzogen, um das Ankleben der Folie zu verhindern. Alternativ zur Beschichtung kann der Schweißbalken mit einer Antihaftfolie ummantelt sein.

Der Heizstempel ist bevorzugt gelenkig, damit dieser sich dem Untergrund anpassen kann. Der Anpressdruck ist sehr wichtig und hat Einfluss auf die Schweißzeit. Beispielweise wird erfindungsgemäß bei 2 Heizstempeln ein Anpressdruck von 2,5 bar (25N/cm²) verwendet. Mit z.B. einer Pneumatikachse mit D=32mm und einer Stempelfläche von 8,05 cm² ergibt sich eine Anpresskraft von 2,51N/Cm².

Die Heizstempel werden bevorzugt auf 90 - 200°C, bevorzugt 120 - 150 °C, besonders bevorzugt 125 - 135 ° aufgeheizt. Die Aufheizung der Heizstempel erfolgt bevorzugt mit je mindestens einer Heizpatrone pro Heizstempel. Die Heizstempel werden für eine Schweißzeit von 1-60 Sek, bevorzugt 3 bis 30 Sek, besonders bevorzugt 5 Sekunden gegen die Folien gedrückt.

Die Bodenfolie und/oder die Folienhaube sind bevorzugt eine markierte Folie. Die Markierungen sind beispielweise firmenspezifische Logos, Symbole, Buchstaben, Zahlen und/oder Muster, wie beispielsweise sogenannte Guilloche-Muster, welche ein zusätzliches manipulationserschwerendes Merkmal darstellen. Eine beschädigte Folie und somit ein potenzieller Manipulationsversuch und damit zusammenhängend eine beschädigte Struktur des Folienmusterdruckes kann nicht oder nur mit sehr großem Aufwand ohne Bruch der Musterstruktur repariert werden. Die verwendete Folienhaube ist bevorzugt mit einem Logo, Symbolen, einem Muster oder einer Marke o.ä. markiert. Die Folienhaube kann transparent, opak, farbig oder farblos sein. Die Folienstärke kann variieren. Die Bodenfolie ist ebenfalls bevorzugt mit einem Logo, Symbolen, einem Muster oder einer Marke o.ä. markiert. Auch die Bodenfolie kann transparent, opak, farbig oder farblos sein. Die Oberfläche der Bodenfolie weist bevorzugt eine Antirutsch-Struktur auf. Die Folienstärke kann variieren. Die Bodenfolie hat bevorzugt zzgl. zum Europoolpalettenformat (1200 mm x 800 mm) einen Überstand von 20 bis 60 mm an allen vier Seiten, welcher nach unten abfällt, um eine Überlappungsfläche mit der Folienhaube für den Schweißvorgang zu schaffen. Der Folienüberstand fällt entweder schwerkrafts- bzw. beschaffenheitsbedingt nach unten ab oder wird händisch oder mittels technischer Verfahren vorab in Form gebracht. Beispielsweise kann eine Stretchfolie als Bodenfolie verwendet und um die Palette gestrecht werden, damit die Bodenfolie eng an der Palette anliegt und keine flatternden Folienenden vorhanden sind, die bei einer automatischen Verarbeitung stören könnten. Der Bodenfolienüberstand stellt die Schweißverbindungsfläche zur Folienhaube dar.

In einer Ausführungsform erfolgt beim erfindungsgemäßen Verfahren ein weiterer Schritt g., in dem
g. die Schweißnähte gekühlt werden
Durch das Kühlen wird sichergestellt, dass zum einen die Schweißnaht ausgehärtet ist und zum anderen keine Verletzungsgefahr durch heißes Folienmaterial mehr besteht. Die Kühlung erfolgt bevorzugt mit Lüftern oder Ventilatoren, wobei die Lüfter oder Ventilatoren auf Höhe der Schweißnaht, bevorzugt auf beiden Seiten der Palette angeordnet sind.

Der weitere Schritt g. erfolgt, in dem entweder
g1. in einer zweiten Station mit mindestens einem Lüfter und/oder Ventilator die Schweißnähte (8) gekühlt werden oder
g2. in der Schweißstation mit mindestens einem Lüfter und/oder Ventilator die Schweißnähte (8) gekühlt werden.

In einer Ausführungsform erfolgt die Anbringung eines Schutzbandes zum Schutz der Schweißnaht. Das Schutzband wird horizontal auf Höhe der Schweißnaht und umlaufend entlang der Schweißnaht angebracht, bevorzugt erfolgt die Anbringung mindestens eines Kunststoffflachbands. Ziel der Bänderung ist der Schutz der Schweißnaht vor transport- und warenumschlagsbedingten Einflüssen. Das Schutzband hat nur eine Schutzfilmfunktion und wird vom Warenempfänger entfernt, bevor die Integrität der Palette und insbesondere der Schweißnaht begutachtet wird.

In einer weiteren Ausführungsform wird zusätzlich oder ersatzweise zum optionalen horizontalen Schutzband eine einfache oder mehrfache Vertikalumreifung auf der Längs- oder Stirnseite der Palette oder Längs- und Stirnseite durchgeführt. Der Zweck der Vertikalumreifung ist die Fixierung des Packgutes auf der unterliegenden Palette sowie die Erhöhung der Stabilität der Packeinheit, um den transporttypischen Belastungen unbeschadet standhalten zu können.

Das Verfahren erfolgt bevorzugt in einer vollautomatischen Anlage mit mindestens einer Station, besonders bevorzugt in einer Anlage mit 2 oder 3 Stationen. Eine Anlage mit 2 bzw. 3 Stationen weist bevorzugt eine Bereitstellungsstation (Station 1) und eine kombinierte Schweiß- und Kühlstation (Station 2) oder eine Schweißstation (Station 2) und eine separate Kühlstation (Station 3) auf. Bevorzugt wird das erfindungsgemäße Verfahren in einer Anlage durchgeführt, die sowohl an der Einfahrt als auch an der Ausfahrt der Anlage über ein Muting-System verfügt, das die gesamte Anlage abschaltet, sobald eine Person versucht, über die Förderstrecke die Anlage zu betreten.

Beim erfindungsgemäßen Verfahren steht das Packgut auf einer Palette und zwischen der Palette und dem Packgut ist eine Bodenfolie, bevorzugt eine Boden-Folienhaube aufgelegt. Über dem Packgut wird eine zweite größere Folienhaube so aufgezogen, das beide Folien eine Überlappungsfläche bilden. Die Überlappungsfläche der Folien ist vollumfänglich, d.h. die Folien überlappen entlang aller vier Seiten der Palette im Bereich der Palette, also entlang des gesamten Palettenumfangs, so dass das Packgut vollständig von Folie umgeben ist und kein Zugriff auf das Packgut ohne Beschädigung der Folie erfolgen kann. An der Überlappungsfläche der Folien werden Boden- und Haubenfolie vollumfänglich verschweißt. Durch diese durchgehende Schweißnaht ist ein Öffnen der Folie ohne deren Beschädigung nicht möglich und es wird somit eine Versiegelung des Packguts sichergestellt. Die Schweißkontur ist umlaufend und schwer zu reproduzieren, um eine Manipulation des Packguts auszuschließen. Diese durchgehende Versiegelung mit konturierter Schweißnaht kann durch reine optische Kontrolle überprüft werden. Mit dem erfindungsgemäßen Verfahren ist daher eine automatisierte und manipulationssichere Verpackung und Versiegelung von Packgut möglich.

In einer bevorzugten Ausführung des Verfahrens fährt eine Europoolpalette mit Packgut, welches mit einer Folienhaube überzogen ist, auf einer Förderstrecke in eine vollautomatische Verschweiß- und Versiegelungsmaschine ein. Das Packgut steht auf einer Bodenfolie und Folienhaube und Bodenfolie überlappen vollumfänglich. In der Anlage ist ein Drehteller, welcher eine 90° Drehung oder 180 ° Drehung der Palette ermöglicht. Im ersten Arbeitsschritt wird die Palette um 90° gedreht, um die Folien auf der 800 mm langen Breitseite der Palette verschweißen zu können. Nach der Drehung erfolgt der zweite Arbeitsschritt, indem die geraden Heizstempel, bevorzugt mittels eines Pneumatikzylinders auf der Höhe des durchgehenden Bretts der Palette an die überlappenden Folien angedrückt werden, so dass die Folien zwischen Stempelfläche und Brett zusammengedrückt und verschweißt werden.

Die geraden Heizstempel sind bevorzugt 200 mm lang. Die Heizstempel werden bevorzugt mit je 2 Heizpatronen auf z.B. 160°C - 170°C aufgeheizt. Nach einer einstellbaren Schweißzeit von ca. 5 Sekunden werden die Heizstempel wieder in die Ausgangsstellung zurückgefahren. Es wurden beispielsweise bei 170°C und ca. 5 sec. Andrückzeit der Heizstempel sowie ca. 25N Druck sehr gute Verschweißungen erzielt. Die zu verschweißten Folien waren nach Abkühlung fest verbunden.

Danach erfolgt ein weiterer Arbeitsschritt, in dem der Drehtisch die Palette in Grundstellung zurückdreht. Nun beginnt der nächste Arbeitsschritt, das Verschweißen der Längsseiten. Hier werden die Heizstempel erneut über Pneumatikzylinder an die Folie auf Höhe des durchgehenden Bretts angedrückt, wobei die Folien zwischen Stempelfläche platt gedrückt werden. Gleichzeitig heben sich die Schweißstempel um z.B. 25mm hoch, da ein Versatz der Bretter auf der Breitseite und der Längsseite der Palette überbrückt werden muss. Nach weiteren 5 Sekunden Schweißzeit fahren die Heizstempel wieder in die Ausgangsstellung zurück. Nun erfolgt der letzte Arbeitsschritt, der auf dem Drehteller stattfindet, das Verschweißen der Ecken an der Palette. Jede Europoolpalette hat 45° Schrägen an den Ecken, diese gilt es auch zu verschweißen. Das erfolgt über vier Heizstempel, die rund sind. Diese werden auch 45°Grad schräg angedrückt, z.B. mit derselben Schweißzeit wie bei den geraden Stempeln. Danach verlässt die Palette den Drehtisch und fährt in die nächste Station.

Gleichzeitig fährt die nächste Palette auf den Drehteller, wo der Schweißvorgang von neuem startet. In der Kühlstation werden mit Lüftern oder Ventilatoren die langen Seiten der Schweißnaht gekühlt. Wenn die "kurze Seiten" zuerst verschweißt werden, haben diese länger Zeit zum Abkühlen. Somit ist es bei dieser Ausführung ausreichend nur die langen Seiten zu kühlen, welche zuletzt verschweißt wurden. Alternativ können auch die langen und die kurzen Seiten in der Kühlstation gekühlt werden. Dann muss die Palette auch in der Kühlstation gedreht werden, damit lange und kurze Seiten gekühlt werden können. Die Palette steht in der Kühlstation so lange bis die Folie auf der nächsten Palette fertig verschweißt ist. Alternativ ist die Kühlstation mit der Schweißstation kombiniert. Die Folie wird in dieser Variante bereits während und fortlaufend nach dem Schweißvorgang gekühlt. Während der Heizstempel an die Folie gedrückt wird, wird gleichzeitig die Folie, die den Heizstempel umgibt, gekühlt. Nach Abheben des Heizstempels wird der Kühlvorgang auch auf der geschweißten Fläche fortgesetzt. Bei der Ausführungsform mit kombinierter Schweiß- und Kühlstation wird während des Schweißens durch den Heizstempel somit die umliegende Folie außerhalb des Schweißbereichs gekühlt, nach dem Schweißvorgang wird die geschweißte und die umliegende Folie gekühlt.

Sowohl an der Einfahrt als auch an der Ausfahrt der vollautomatischen Anlage ist bevorzugt ein sogenanntes "Muting" System installiert. Das schaltet die gesamte Anlage ab, sobald eine Person versucht, über die Förderstrecke die Anlage zu betreten.

Durch die kurzen Schweißzeiten beträgt bei dieser Ausführungsform die Dauer eines Zyklus bevorzugt weniger als 60 Sekunden pro Palette. Die Geschwindigkeiten des Zyklus sind anpassbar an die in einer bestehenden Anlage vorhandene Fördertechnik, wobei der Standard 0,3m/s beträgt.

Das erfindungsgemäße Verfahren wird bevorzugt mit einer Vorrichtung durchgeführt. Die Vorrichtung weist bevorzugt mindestens einen geraden Heizstempel und mindestens einen runden Heizstempel auf. Die Heizstempel sind bevorzugt paarweise angeordneten. In einer bevorzugten Ausführungsform weist die erfindungsgemäße Vorrichtung 12 bis 20 gerade Heizstempel und 4 runde Heizstempel auf, wobei die Heizstempel bevorzugt paarweise einander gegenüberliegenden angeordnet sind, d.h. dass bevorzugt je 6 gerade Heizstempel auf einer Seite der Vorrichtung angeordnet sind.

Weiterhin weist die Vorrichtung bevorzugt mindestens eine Heizpatrone zum Aufheizen eines Heizstempels auf. Eine Heizpatrone ist jeweils mit mindestens einem Heizstempel verbunden, besonders bevorzugt ist jeder Heizstempel mit zwei Heizpatronen verbunden. Die Vorrichtung weist bevorzugt mindestens einen Pneumatikzylinder auf, der mit einem Heizstempel gekoppelt ist. Durch den Pneumatikzylinder wird der Heizstempel aus einer Ausgangsposition (Ruhposition) in eine Andruckposition an der Folie, in der der Schweißvorgang erfolgt, und wieder zurückbewegt.

In einer Ausführungsform weist die Vorrichtung eine Kühlstation mit Lüftern und/oder Ventilatoren oder anderen Kühlvorrichtungen auf. In der Kühlstation wird die Schweißnaht der Folie nach dem Schweißen oder parallel zu Schweißen abgekühlt.

In einer weiteren Ausführungsform weist die Vorrichtung eine mit der Schweißstation kombinierte Kühlstation auf. In der Kühlstation wird die Schweißnaht der Folie parallel zum Schweißen abgekühlt. Die Kühlstation ist in dieser Ausführungsform mit der Schweißstation kombiniert und bildet mit dieser räumlich eine Einheit.

Gegebenenfalls weist die Vorrichtung eine Bereitstellungsstation auf, in der die Palette mit dem Packgut, das auf einer Bodenfolie steht und mit einer Folienhaube von oben bedeckt ist, für den Schweißvorgang bereitgestellt wird. Die Kühlstation und die Bereitstellungsstation sind in einer Ausführungsform räumlich von der Schweißstation getrennt und die Schweißstation, die Kühlstation und ggf. die Bereitstellungsstation sind über eine Förderstrecke miteinander verbunden, die die Palette mit Packgut aus der Bereitstellungsstation in die Schweißstation und anschließend in die Kühlstation befördert.

Bevorzugt weist die Vorrichtung ein Muting-System auf, dass die Vorrichtung abschaltet, sobald eine Person versucht, über die Förderstrecke die Vorrichtung zu betreten. Bevorzugt ist die erfindungsgemäße Vorrichtung komplett verkleidet, so dass ein Zugriff ebenfalls schwierig ist.

Die Vorrichtung ist bevorzugt ein Vollautomat und kann somit in eine Förderanlage von verschiedenen Herstellern integriert werden.

Das erfindungsgemäße Verfahren erlaubt es eine manipulationssichere Verpackung für Packgut auf Paletten bereitzustellen. Der Warenempfänger und sonstige Akteure in der Transportkette, wie z.B. Spediteure, Behörden, Kontrollkräfte an Flughäfen können durch die konturierte Schweißnaht und die vollständige Einschließung des Packguts in die Folie die Integrität der Sendung bei der Warenannahme beurteilen. Durch eine 360°-Prüfung der Folie insbesondere der horizontalen, konturierten Schweißnaht auf Palettenhöhe können Manipulationen und Manipulationsversuche, wie Entnahme, Einbringen oder Austausch von Gegenständen, erkannt werden und die Palette in Verdachtsmomenten einer gesonderten Prüfung zugeführt werden.

Für das erfindungsgemäße Verfahren ist ein breites Einsatzgebiet vorgesehen. Die Verpackung des Packguts kann allgemein aus Diebstahlpräventionsgründen bzw. als Mittel der Beweisführung durch Eingrenzung von Diebstahlzeitpunkten und Lokalisierung im Rahmen von Schnittstellenkontrollen genutzt werden. Insbesondere werden das erfindungsgemäß Verfahren und die erfindungsgemäße Vorrichtung für die Belieferung von sensiblen Kunden, die z.B. in Flughafensicherheitsbereichen ansässig sind oder z.B. Diplomaten oder Militär verwendet. Es ist auch ein Einsatz für die Belieferung in sensiblen Märkten, z.B. in Krisengebiete möglich. Das erfindungsgemäß Verfahren kann auch zur Verpackung von Packgut, das auf besonders schutzbedürftigen Verkehrsträgern, wie z.B. Flugzeugen oder Seeschiffen transportiert wird, zum Einsatz kommen.

Ein bevorzugter Einsatzbereich für das erfindungsgemäße Verfahren ist der Bereich der Luftfracht. Dabei ist das Verfahren sowohl für Lieferungen in die Sicherheitsbereiche von Flughäfen am Boden, als auch für die Bereitstellung von Bordvorräten geeignet. Einen weiteren bevorzugten Einsatzbereich für das erfindungsgemäße Verfahren stellt die Seeschifffahrt dar.

Die Erfindung wird anhand der Figuren beispielhaft erläutert. Es zeigen
Figur 1 eine Vorrichtung zur Durchführung des erfindungsgemäßen Verfahrens mit Schweißstation, Kühlstation und Bereitstellungsstation,
Figur 2 einen Heizstempel zu Durchführung des erfindungsgemäßen Verfahrens oder zur Verwendung in der Vorrichtung und
Figur 3 schematisch eine Palette mit Packgut.

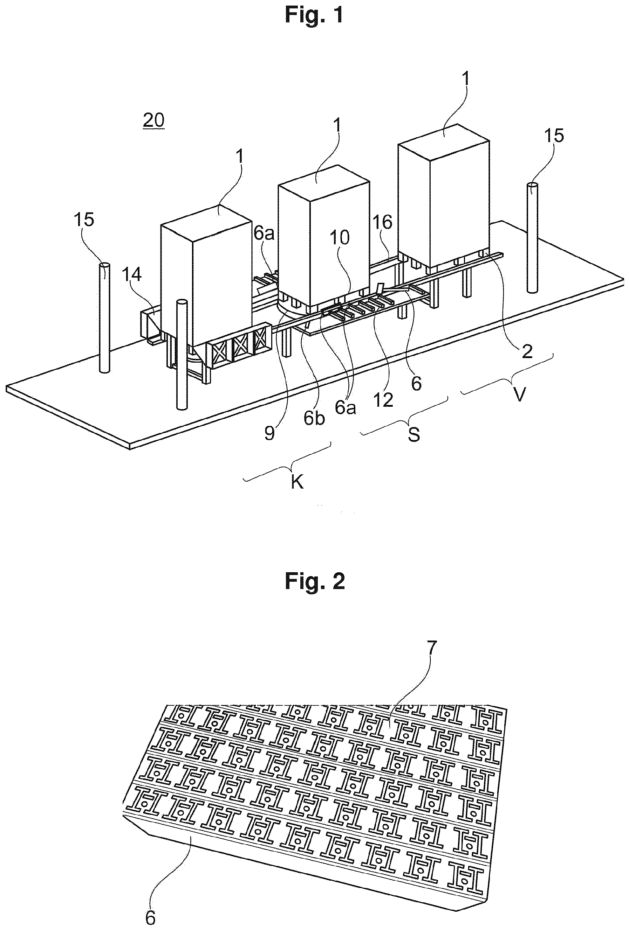

Figur 1 zeigt eine Vorrichtung 20 mit Bereitstellungsstation V, Schweißstation S und Kühlstation K. Die Stationen sind über eine Förderstrecke F miteinander verbunden. Die gesamte Vorrichtung 20 ist durch ein Muting-System 15 geschützt. In der Bereitstellungsstation V befindet sich eine Palette 2 mit Packgut 1. Das Packgut 1 ist zur Palette hin mit einer Bodenfolie und nach oben mit einer Folienhaube bedeckt (nicht dargestellt). In der benachbarten Schweißstation befindet sich eine zweite Palette 2 mit Packgut 1. In der Schweißstation S sind auf beiden Seiten der Palette 2 mehrerer Heizstempel angeordnet. Es ist erkennbar, dass die Heizstempel 6 jeweils paarweise angeordnet sind. Auf der Längsseite 10 der Palette sind mehrere gerade Heizstempel 6a erkennbar, während an den Ecken mehrerer runde Heizstempel 6b erkennbar sind. Die Heizstempel sind jeweils mit einem Pneumatikzylinder 12 verbunden. Die Palette 2 steht auf einem Drehteller 9, der auf der Unterseite eine Hubvorrichtung aufweist. In der separaten Kühlstation K befindet sich eine 3. Palette 2 mit Packgut 1. Die Kühlstation weist mehrere Ventilatoren 14 auf, die an beiden Seiten der Palette 2 einander gegenüberliegend angeordnet sind.

Figur 2 zeigt einen Heizstempel 6, wie er für das erfindungsgemäße Verfahren verwendet wird. Es ist deutlich die konturierte Stempelfläche 7 erkennbar, die hier eine Fräsung mit mehreren Reihen eines Logos aufweist

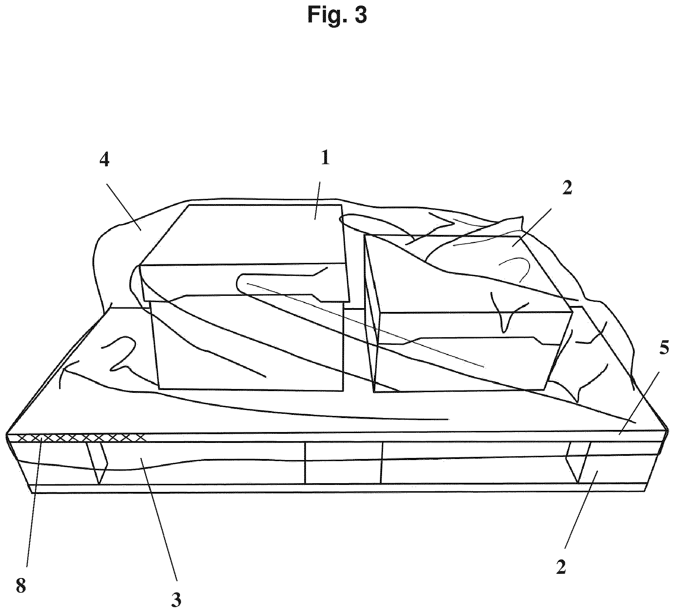

Figur 3 zeigt schematisch eine Palette 2 mit Packgut 1, das auf einer Bodenfolie 3 steht und von oben mit einer Folienhaube 4 bedeckt ist. Es ist erkennbar, dass Bodenfolie 3 und Folienhaube 4 überlappen. Die Folien sind bereits teilweise mit einer konturierten Schweißnaht 8 verbunden.

**Bezugszeichenliste**

| | |
|---|---|
| Packgut | 1 |
| Palette | 2 |
| Bodenfolie | 3 |
| Folienhaube | 4 |
| Überlappungsfläche | 5 |
| Heizstempel | 6 |
| konturierte Stempelfläche | 7 |
| konturierte Schweißnaht | 8 |
| Drehteller | 9 |
| Längsseite der Palette | 10 |
| Breitseite der Palette | 11 |
| Pneumatikzylinder | 12 |
| Heizpatrone | 13 |
| Lüfter/Ventilator | 14 |
| Mutingsystem | 15 |
| Förderstrecke | 16 |
| Vorrichtung | 20 |
| Länge | L |
| Breite | B |
| Ecke | E |
| Schweißstation | S |
| Kühlstation | K |
| Vorstation | V |

## Patentansprüche

1. Verfahren zur manipulationssicheren Versieglung von Packgut (1) auf einer Palette (2), wobei das Verfahren die folgenden Schritte umfasst:
a. Positionieren einer Bodenfolie (3) auf einer Palette (2),
b. Positionieren von Packgut (1) auf der Bodenfolie (3), die auf der Palette (2) liegt,
c. Aufziehen einer Folienhaube (4) über das Packgut, so dass die Bodenfolie (3) und die Folienhaube (4) vollumfänglich überlappen und eine Überlappungsfläche (5) bilden,
d. Positionieren der Palette (2) in einer Schweißanlage,
e. Verschweißen der Folien (3, 4) im Bereich der Überlappungsfläche (5) von Folienhaube und Bodenfolie
**dadurch gekennzeichnet, dass**
das Verschweißen der Folien in Schritt e. auf Höhe der Palette (2) erfolgt, wobei im Überlappungsbereich (5) von Folienhaube und Bodenfolie eine konturierte Schweißnaht (8) aufgebracht wird und das Schweißverfahren gemäß Schritt e. die Schritte umfasst:
e. Aufheizen eines Heizstempels (6), mit einer konturierten Stempelfläche (7),
f. Pressen des Heizstempels (6) gegen die Folien im Überlappungsbereich (5) von Folienhaube (4) und Bodenfolie (3) auf Höhe der Palette (2) für eine Schweißzeit von 1-60 Sek und Verschweißen von Bodenfolie (3) und Folienhaube (4) miteinander, wobei im Überlappungsbereich (5) von Folienhaube und Bodenfolie eine konturierte Schweißnaht (8) entsteht
wobei die Palette (2) im Schritt d. auf einem Drehteller (9) platziert wird und
das Verschweißen gemäß Schritt f. in folgenden Schritten erfolgt:
f1. Drehen der Palette (2) auf dem Drehteller (9) um 90°,
f2. Verschweißen der Folien (3,4) auf beiden Breitseiten (11) der Palette, wobei ein oder mehrere flache/gerade Heizstempel (6) auf der gesamten Breite (B) der Palette gegen die Folien gedrückt werden,
f3. Drehung der Palette (2) auf dem Drehteller auf (9) um 90° zurück in die Ausgangsposition,
f4. Verschweißen der Folien (3,4) auf beiden Längsseiten (10) der Palette (2), wobei auf beiden Seiten der Palette ein oder mehrere flache/gerade Heizstempel (6) auf der gesamten Länge (L) der Palette gegen die Folien gedrückt werden, wobei die Schweißeinheit bevorzugt um den Versatz der Palettenbretter angehoben wird,
f5. Verschweißen der Folien (3,4) an den 4 Ecken (E) der Palette, wobei ein oder mehrere runde Heizstempel (6) an der Ecke (E) der Palette gegen die Folien gedrückt werden.

2. Verfahren gemäß Patentanspruch 1, **dadurch gekennzeichnet, dass** die Schweißvorgänge jeweils paarweise erfolgen und immer die einander gegenüberliegenden Seiten gleichzeitig verschweißt werden.

3. Verfahren gemäß einem der vorhergehenden Patentansprüche 1 oder 2, **dadurch gekennzeichnet, dass** das Verschweißen der Folien (3,4) die Schritte
• Ausfahren des Heizstempels (6) aus einer Ausgangsposition,
• Aufheizen des Heizstempels (6),
• Andrücken des Heizstempels (6) an die Folien (3,4),und
• Zurückfahren des Heizstempels (6) in eine Ausgangsposition,
umfasst, wobei der Heizstempel (6) bevorzugt pneumatisch betrieben wird.

4. Verfahren gemäß einem der vorhergehenden Patentansprüchen **dadurch gekennzeichnet, dass** die Heizstempel (6) mit je mindestens einer Heizpatronen auf 90 - 200°C, bevorzugt 120 - 150 °C, besonders bevorzugt 125 - 135 ° aufgeheizt werden und für eine Schweißzeit von 1-60 Sek, bevorzugt 3 bis 30 Sek, besonders bevorzugt 5 Sekunden gegen die Folien (3,4) gedrückt werden.

5. Verfahren gemäß einem der vorhergehenden Patentansprüche **dadurch gekennzeichnet, dass** die Bodenfolie (3) und/oder die Folienhaube (4) eine markierte Folie sind, bevorzugt mit einem Muster, Logos, Symbolen, Marken oder einer Mischung hiervon markiert.

6. Verfahren gemäß einem der vorhergehenden Patentansprüche **dadurch gekennzeichnet, dass** der Heizstempel eine Kontur in Form eines Logos, eines Symbols, eines oder mehrerer Buchstaben, eines Musters oder eines Schriftzugs aufweist.

## Claims

1. Method for tamper-proof sealing of packaged goods (1) on a pallet (2), wherein the method comprises the following steps:
a. Positioning a base film (3) on a pallet (2),
b. Positioning the packaged goods (1) on the base film (3), which is situated on the pallet (2),
c. Pulling up a film hood (4) over the packaged goods, such that the base film (3) and the film hood (4) completely overlap and form an overlap area (5),
d. Positioning the pallet (2) in a welding system,
e. Welding the films (3, 4) in the region of the overlap area (5) of film hood and base film
**characterised in that**
the films are welded in step e at the level of the pallet (2), wherein a contoured weld seam (8) is applied in the overlap region (5) of film hood and base film,
and the welding process according to step e. comprises the following steps:
e. Heating up a heating stamp (6) having a contoured stamp surface (7),
f. Pressing the heating stamp (6) against the films in the overlap region (5) of film hood (4) and base film (3) at the level of the pallet (2) for a welding time of 1-60 seconds, and welding the base film (3) and film hood (4) to one another, wherein a contoured weld seam (8) emerges in the overlap region (5) of the film hood and base film:
wherein the pallet (2) in step d. is positioned on a rotary table (9), and the welding according to step f. takes place in the following steps:
f1. Rotating the pallet (2) on the rotary table (9) by 90°,
f2. Welding the films (3, 4) onto both broad sides (11) of the pallet, wherein
one or more flat/straight heating stamps (6) are pressed against the films across the entire width (B) of the pallet,
f3. Rotation of the pallet (2) on the rotary table to (9) by 90° back into the starting position,
f4. Welding the films (3, 4) on both longitudinal sides (10) of the pallet (2), wherein, on both sides of the pallet, one or more flat/straight heating stamps (6) are pressed against the films across the entire length (L) of the pallet, wherein the welding unit is preferably raised by the offset of the pallet boards,
f5. Welding the films (3, 4) at the 4 corners (E) of the pallet, wherein one or more round heating stamps (6) are pressed against the films on the corner (E) of the pallet.

2. Method according to claim 1, **characterised in that** the welding processes are respectively undertaken in pairs, and the opposite sides are always welded to one another simultaneously.

3. Method according to one of the preceding claims 1 or 2, **characterised in that** the welding of the films (3,4) comprises the following steps:
• Extending the heating stamp (6) from a starting position,
• Heating up the heating stamp (6),
• Pressing the heating stamp (6) onto the films (3,4), and
• Returning the heating stamp (6) to a starting position,
wherein the heating stamp (6) is preferably pneumatically operated.

4. Method according to one of the preceding claims, **characterised in that** the heating stamps (6) are heated up with at least one heating cartridge each to 90 - 200°C, preferably 120-150°C, particularly preferably to 125 -135°C, and are pressed against the films (3,4) for a welding time of 1-60 seconds, preferably 3 to 30 seconds, particularly preferably 5 seconds.

5. Method according to one of the preceding claims, **characterised in that** the base film (3) and/or the film hood (4) are a marked film, preferably marked with a pattern, logos, symbols, labels, or a mixture of these.

6. Method according to one of the preceding claims, **characterised in that** the heating stamp has a contour in the form of a logo, a symbol, one or more letters, a pattern, or lettering.

## Revendications

1. Procédé de scellage inviolable de marchandises à emballer (1) sur une palette (2), le procédé comprenant les étapes suivantes :
a. positionnement d'un film inférieur (3) sur une palette (2),
b. positionnement des marchandises à emballer (1) sur le film inférieur (3) reposant sur la palette (2),
c. mise en place d'une housse de film (4) sur les marchandises à emballer, de manière à ce que le film inférieur (3) et la housse de film (4) se chevauchent sur tout le pourtour et forment une surface de recouvrement (5),
d. positionnement de la palette (2) dans une installation de soudage,
e. soudage des films (3, 4) dans la région de la surface de recouvrement (5) de la housse de film et du film inférieur,
**caractérisé en ce que**
le soudage des films à l'étape e. s'effectue au niveau de la palette (2), en réalisant une soudure profilée (8) dans la zone de recouvrement (5) de la housse de film et du film inférieur, et **en ce que** le procédé de soudage selon l'étape e. comprend les étapes suivantes :
e. chauffage d'un poinçon de chauffage (6) doté d'une surface de poinçon profilée (7),
f. application du poinçon de chauffage (6) contre les films dans la zone de recouvrement (5) de la housse de film (4) et du film inférieur (3), au niveau de la palette (2), pendant un temps de soudage allant de 1 à 60 s, et soudage du film inférieur (3) et de la housse de film (4) entre eux, en réalisant une soudure profilée (8) dans la zone de recouvrement (5) de la housse de film et du film inférieur,
la palette (2) étant disposée sur un plateau tournant (9) à l'étape d., et le soudage de l'étape f. étant effectué selon les étapes suivantes :
f1. rotation de la palette (2) de 90 ° sur le plateau tournant (9),
f2. soudage des films (3, 4) sur les deux petits côtés (11) de la palette, en pressant un ou plusieurs poinçons de chauffage (6) plats/rectilignes contre les films, sur toute la largeur (B) de la palette,
f3. rotation de la palette (2) de 90 ° sur le plateau tournant (9) pour le ramener dans la position initiale,
f4. soudage des films (3, 4) sur les deux grands côtés (10) de la palette, en pressant un ou plusieurs poinçons de chauffage (6) plats/rectilignes contre les films, sur les deux côtés de la palette, sur toute la longueur (L) de la palette, en levant l'unité de soudage de préférence de la valeur du décalage des planches de la palette,
f5. soudage des films (3, 4) aux 4 angles (E) de la palette, en pressant un ou plusieurs poinçons de chauffage (6) ronds contre les films, dans l'angle (E) de la palette.

2. Procédé selon la revendication 1, **caractérisé en ce que** les opérations de soudage s'effectuent chaque fois par paires et que l'on soude toujours en même temps les côtés opposés.

3. Procédé selon l'une des revendications précédentes 1 ou 2, **caractérisé en ce que** le soudage des films (3, 4) comprend les étapes de
• déploiement du poinçon de chauffage (6) à partir d'une position initiale,
• chauffage du poinçon de chauffage (6),
• application du poinçon de chauffage (6) contre les films (3, 4), et
• retour du poinçon de chauffage (6) dans une position initiale,
le poinçon de chauffage (6) étant commandé de préférence par voie pneumatique.

4. Procédé selon l'une des revendications précédentes, **caractérisé en ce que** les poinçons de chauffage (6) sont chauffés respectivement avec au moins une cartouche de chauffage à 90 à 200 °C, de préférence à 120 à 150 °C, et de façon particulièrement avantageuse à 125 à 135 °C, et sont pressés contre les films (3, 4) pendant un temps de soudage allant de 1 à 60 s, de préférence de 3 à 30 s, et de façon particulièrement avantageuse pendant 5 secondes.

5. Procédé selon l'une des revendications précédentes, **caractérisé en ce que** le film inférieur (3) et/ou la housse de film (4) sont des films pourvus d'un marquage, de préférence d'un motif, de logos, de symboles, de repères ou d'un mélange de ces éléments.

6. Procédé selon l'une des revendications précédentes, **caractérisé en ce que** le poinçon de chauffage présente un contour en forme de logo, de symbole, d'une ou plusieurs lettres, d'un motif ou d'une inscription.
